# EUROPÄISCHE PATENTANMELDUNG

(11) **EP 1 564 023 A2**
(43) Veröffentlichungstag der Anmeldung: **17.08.2005**
(21) Anmeldenummer: 05002927.1
(22) Anmeldetag: 11.02.2005
(51) Int. Cl.: B42F 13/00

(54) **Ordner als Schriftgutbehälter**

(30) Priorität: 14.02.2004 DE 102004007267
(71) Anmelder: Falken Office Products GmbH, 03185 Peitz / Brandenburg (DE)
(72) Erfinder: Böllsterling, Michael, 03185 Peitz (DE); Kahl, Michael, 03185 Peitz (DE)
(74) Vertreter: Rehmann, Thorsten, Dipl.-Ing.

(57) **Zusammenfassung**

Es wird ein Ordner als Schriftgutbehälter mit zwei Deckeln offenbart, die zumindest an einer Randseite miteinander verbunden sind, so dass Schriftgut zwischen den beiden Deckeln eingefügt werden kann, wobei die Deckel jeweils einen Kern (1) und eine an dem Kern angebrachte Kaschierung (2) aufweisen. Um sowohl Kosten bei der Herstellung als auch das Eigengewicht der Ordner deutlich zu reduzieren wird vorgeschlagen, dass der Kern (1) zumindest teilweise einen mehrwelligen Aufbau mit mindestens zwei Wellenschichten (3, 4) aufweist, zwischen denen eine Zwischendecke (5) angeordnet ist.

## Beschreibung

Die vorliegende Erfindung betrifft Ordner als Schriftgutbehälter mit zwei Deckeln, die zumindest an einer Randseite miteinander verbunden sind, so dass Schriftgut zwischen den beiden Deckeln eingefügt werden kann, wobei die Deckel jeweils einen Kern, der zumindest teilweise mindestens zwei Wellenschichten aufweist, zwischen denen eine Zwischendecke angeordnet ist, und eine an dem Kern angebrachte Kaschierung aufweisen.

Derartige Ordnersysteme sind hinlänglich bekannt und werden in der DIN 821 Teil 1 beschrieben. Die gattungsartigen Ordner sind geeignet als liegende (lateral), stehende sowie (vertikal) hängende Schriftgutbehälter. Der Kern der Deckel umfasst üblicherweise einen Zuschnitt aus fester Pappe, beispielsweise aus einer Rund- oder Langsiebpappe. Ferner sind Kernmaterialien aus einer gegautschten Pappe bzw. Karton und/oder aus einer Hartpappe bekannt.

Je nach den qualitativen Anforderungen an die Ordner werden verschiedene Ausführungen hergestellt. Dabei kann die Dicke des Kernmaterials im Wertebereich von etwa 1,5 mm bis etwa 2,5 mm variieren. Weitere Qualitätsunterschiede können durch den Einsatz unterschiedlicher Behandlungen des Kernmaterials oder durch die Verwendung von Kaschiermaterialien unterschiedlichster Art erreicht werden. Beispielsweise kann das Kernmaterial mittels einer Färbung, einer Aufbringung einer Lackschicht und/oder durch ein Vorsehen einer Prägung behandelt bzw. veredelt werden.

Die vorstehend erwähnten Ordner werden in allen handelsüblichen Größen und Formaten hergestellt. Dabei können sie mehrere Aufreihstifte bzw. mechanische Aufnahmesysteme aufweisen, beispielsweise Ringbuch- und/oder Mehrringmechaniken.

Die Verwendung einer festen und somit stabilen Pappe, oft auch als Graupappe bezeichnet, für das Kernmaterial ist aufgrund des Einsatzes eines Materials mit relativ hoher Dichte kostenintensiv und führt überdies zu Ordnern mit einem relativ großen Eigengewicht.

Die DE 90 16 763 U1 offenbart einen Aktenordner bestehend aus einem vorderen und hinteren Ordnerdeckel, die über einen Ordnerrücken einstückig miteinander verbunden sind, und aus einer Bindung zur Aufnahme und Halterung abzuheftender Aktenteile. Der vordere Ordnerdeckel und der hintere Ordnerdeckel sind an ihrem, dem Ordnerrücken gegenüberliegenden freien Seiten mit Deckelrändern versehen, in die unter Bildung von Tragegriffen Griffausnehmungen gestanzt sind. Die Ordnerdeckel können beispielsweise aus Wellpappe bestehen, die im Bereich ihrer Deckelränder um eine vorbestimmbare Randbreite doppelt gelegt sind. Die Tragegriffe umfassen nicht die gesamte Randbreite der Deckelränder und können durch Zusammenlegen der Ordnerdeckel zu einem gemeinsamen Griff zusammengefasst werden. Der Aktenordner kann so geschlossen gehalten und leicht getragen werden.

In der DE 93 10 794 U1 wird eine verschließbare Mappe zur Aufnahme von großformatigen Dokumenten, Zeichnungen oder Bildern beschrieben, die ausschließlich aus einer Wellpappe besteht. Die Wellpappe umfasst eine auf eine geschlossene Welle kaschierte Mikrowelle. Die Laufrichtung beider Wellen ist um 90° gegeneinander verdreht.

Schließlich ist aus der DE 86 13 224 U1 ein Deckel von Büchern oder Aktenordnern aus einer mindestens zweischichtig zusammengeklebter Pappe bekannt, wobei der Deckel aus Wellpappe besteht und zwischen zwei außen liegenden Deckschichten aus Vollpappe eine Zwischenwelle geringer Wellenhöhe aufweist. Die Zwischenwelle am Deckel verläuft senkrecht zur unteren Stellkante.

Vor diesem Hintergrund ist es die Aufgabe der vorliegenden Erfindung, Ordner der eingangs genannten Art anzugeben, die bei einem reduzierten Gewicht eine ausreichende Stabilität und Steifigkeit aufweisen.

Diese Aufgabe wird durch einen Ordner gemäß den Merkmalen des Anspruches 1 gelöst.

Der Ordner ist als Schriftgutbehälter geeignet und weist zwei Deckel auf die zumindest an einer Randseite miteinander verbunden sind, so dass Schriftgut zwischen den beiden Deckeln eingefügt werden kann. Hierbei ist vorgesehen, dass die Deckel jeweils einen Kern und eine an den Kern angebrachte Kaschierung aufweisen. Der Kern der Deckel umfasst zumindest teilweise einen mehrwelligen Aufbau mit mindestens zwei Wellenschichten, zwischen denen eine Zwischendecke angeordnet ist. Erfindungsgemäß sind die Wellenzahlen der einzelnen Wellenschichten unterschiedlich. Dadurch ist auf der Seite einer Wellenschicht mit einer größeren Wellenzahl die Oberfläche glatter und kann besser bedruckt werden. Die Schicht mit der höheren Wellenzahl weist ferner eine größere Steifigkeit auf, wohingegen eine Wellenschicht mit einer niedrigeren Wellenzahl den Vorteil einer höheren Elastizität aufweist.

Durch den mehrwelligen Aufbau des Kernmaterials wird weniger Material bei der Herstellung des Ordners benötigt. Dies senkt einerseits die Dichte des Materials und somit das Gewicht des Ordners sowie andererseits die Materialkosten, was sich dann in reduzierten Herstellungskosten niederschlägt. Bei der Substitution des herkömmlichen Kernmaterials durch das erfindungsgemäße mehrwellige Kernmaterial wird bevorzugt nur ein Teil des Kernmaterials ausgetauscht. Es kann sinnvoll sein, besonders in einem oder mehreren Randbereichen der Decken das herkömmliche Kernmaterial bzw. die Graupappe zu verwenden, um eine bessere Stoßfestigkeit in den dortigen Bereichen zu erhalten.

Alternativ ist bei einer weiteren Ausführungsform der vorliegenden Erfindung vorgesehen, dass der Kern der Deckel vollständig den mehrwelligen Aufbau aufweist. Hierdurch entfällt der Einsatz des herkömmlichen Kernmaterials mit seinen Nachteilen.

In einer bevorzugten Weitergestaltung des erfindungsgemäßen Ordners sind die Dicken der einzelnen Wellenschichten unterschiedlich. Durch die Varianz der Schichtdicke können die Vorteile und Eigenschaften aufgrund der unterschiedlichen Wellenzahlen der einzelnen Schichten weiter verbessert werden.

Als vorteilhaft hat sich an einem erfindungsgemäßen Ordner eine der Wellenschichten von etwa 0,1 bis etwa 2,0 mm erwiesen. Hierbei erwies sich als besonders vorteilhaft, wenn die dünnere Wellenschicht zugleich die höhere Wellenzahl aufweist.

Eine weitere vorteilhafte Ausgestaltung des erfindungsgemäßen Ordners sieht zur Verbindung des ersten und des zweiten Deckels einen Rückendeckel vor, der den gleichen mehrwelligen Kernaufbau aufweist. Die Vorteile für den Aufbau der Rückendeckel aus dem mehrwelligen Kernmaterial entsprechen den Vorteilen der Verwendung des mehrwelligen Kernmaterials für die beiden weiteren Deckel.

Die beiden Deckel und der Rückendeckel können einteilig ausgebildet sein. Durch einseitig eingerollte parallel verlaufende Nuten wird der Rückendeckel von den beiden anderen Deckeln abgeteilt. Durch Knicken entlang der Nuten wird der Ordner geformt.

Eine bevorzugte Weitergestaltung des erfindungsgemäßen Ordners sieht die Anordnung eines mechanischen Aufnahmesystems für das Schriftgut an einer Innenseite der Deckel vor. Das mechanische Aufnahmesystem gewährleistet dabei einen sicheren Halt des Schriftgutes innerhalb des Ordners.

Bei einer sinnvollen Ausgestaltung des erfindungsgemäßen Ordners sind in den Decken eine oder mehrere Ausnehmungen vorgesehen. Durch diese Ausnehmungen können beispielsweise mechanische Aufnahmesysteme teilweise durch die Decke ragen oder eine Ausnehmung in der Rückendecke kann dazu dienen, dass ein Anwender den Ordner mit einem Finger ergreifen kann. Die Ausnehmungen können dabei an ihren Rändern Verstärkungen aufweisen, um die verbesserte Dauerhaftigkeit zu gewährleisten.

Eine vorteilhafte Ausführungsform des erfindungsgemäßen Ordners weist eine Kaschierung des Kernmaterials aus Papier auf. Eine Papier-Kaschierung ist preiswert und kann mit einem polymeren Dispersions-Leim aufgeklebt werden. Als Papier kann beispielsweise Recycling-Papier oder zellstoffbasierendes Papier verwendet werden.

Eine alternative Ausgestaltung des erfindungsgemäßen Ordners sieht eine Kaschierung aus einer PP-Folie vor, die ein auf Leim basierender Verbundwerkstoff ist. Der Vorteil der PP-Folien-Kaschierung liegt in der wasserabweisenden Eigenschaft dieser Folie. Das Aufbringen der PP-Folie kann mittels eines Co-Polymeren Dispersions-Leimes durchgeführt werden.

Nachfolgend wird die vorliegende Erfindung anhand der detaillierten Beschreibung zweier Ausführungsbeispiele im Zusammenhang mit den beigefügten Zeichnungen näher erläutert. Diese zeigen in:
- Figur 1: eine perspektivische Querschnittsdarstellung eines ersten Ausführungsbeispiels eines Ordnerdeckels gemäß der vorliegenden Erfindung;
- Figur 2: eine Draufsicht auf ein weiteres Ausführungsbeispiel eines Ordner deckels gemäß der vorliegenden Erfindung:
- Figur 3: einen Querschnitt durch den Ordnerdeckel gemäß Figur 2 entlang der Linie I-I;
- Figur 4: eine Gesamtansicht eines Ordners.

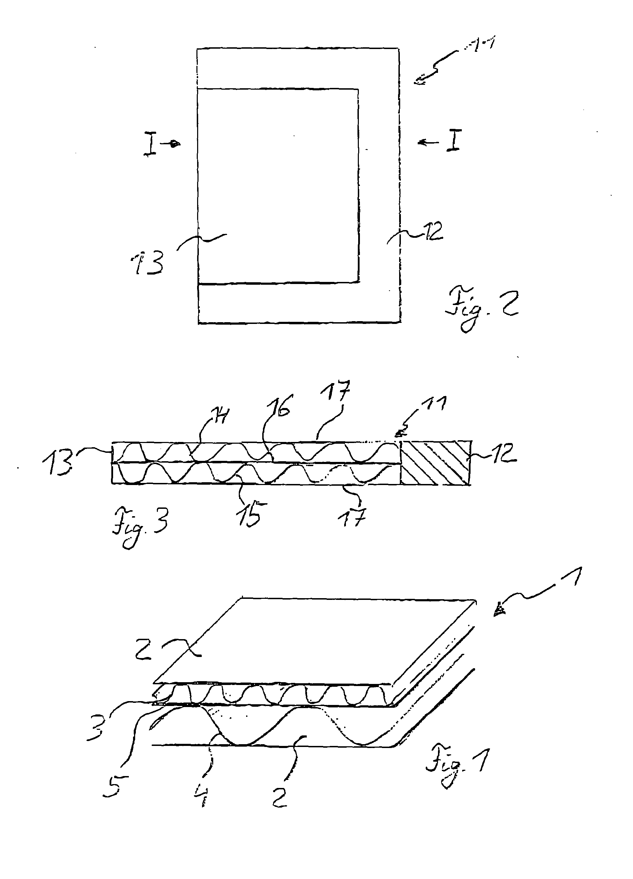

Ein erstes Ausführungsbeispiel der vorliegenden Erfindung wird in der Figur 1 dargestellt. Dort ist in einer perspektivischen Ansicht ein Ordnerdeckel 1 gezeigt. Der Ordnerdeckel 1 weist an beiden Außenseiten jeweils eine Kaschierung 2 auf. Zwischen diesen beiden Kaschierungen 2 befinden sich eine erste Wellenschicht 3 und eine zweite Wellenschicht 4, die jeweils an den gegenüberliegenden Seiten einer Zwischendecke 5 angeordnet und befestigt sind.

Das in Figur 1 dargestellte erste Ausführungsbeispiel weist sowohl verschiedene Wellenzahlen als auch abweichende Schichtdicken der beiden Wellenschichten 3, 4 auf. Wellenzahl bedeutet in dieser Anmeldung die Anzahl der Berührungen bzw. Klebungen einer der Wellenschichten 3, 4 mit der Zwischendecke 5 oder der Kaschierung 2 pro definierter Längeneinheit in der zur Wellenausrichtung senkrechten Richtung. Die Wellenschicht 3 ist dünner und hat eine höhere Wellenzahl als die darunter befindliche Wellenschicht 4. Die dünnere und mit einer höheren Wellenzahl versehene Wellenschicht 3 bewirkt für den Ordnerdeckel 1 eine höhere Stabilität und Steifigkeit. Die Wellenschicht 4 ist aufgrund ihrer Gestaltung hingegen elastischer.

Hauptvorteil dieser Ausführungsform ist aufgrund des deutlich geringeren Materialeinsatzes die Kostenersparnis und die deutliche Gewichtsreduzierung.

Obwohl in dieser Figur nicht dargestellt, können die Kaschierungen 2 mit Prägungen versehen werden und/oder sie können ferner mit einem Aufdruck bedruckt werden.

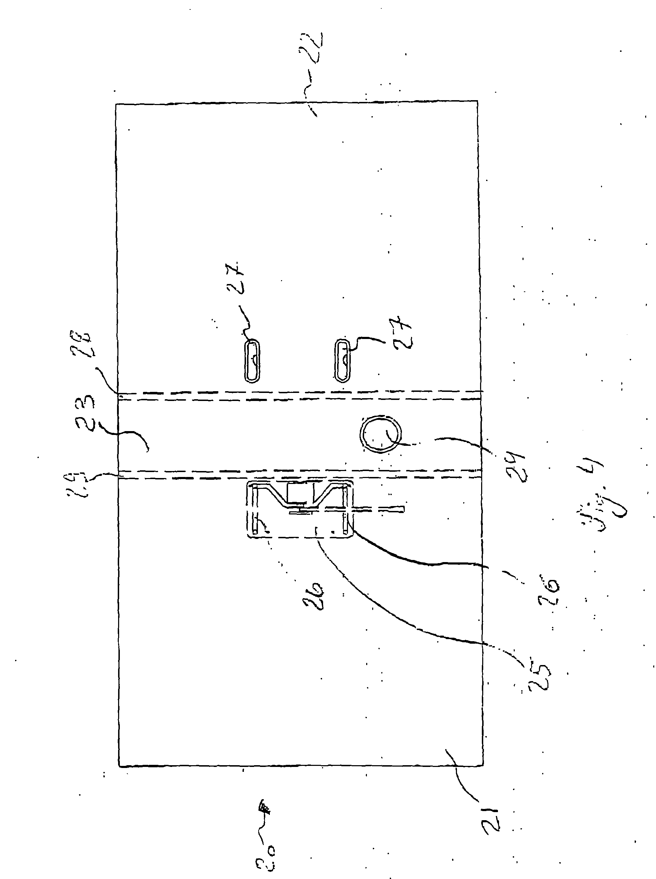

Ein alternatives Ausführungsbeispiel der vorliegenden Erfindung wird anhand der Figuren 2 und 3 erläutert. In der Darstellung der Figur 2 ist der Kern 11 eines Ordnerdeckels gemäß der vorliegenden Erfindung in Draufsicht zu sehen. Der Kern 11 besteht an drei Randbereichen aus einer herkömmlichen, stabilen Pappe 12. In der Mitte und an einer Seite zum Seitenrand reichend weist der Kern 11 ein zwei-lagiges Wellpappmaterial 13 gemäß der vorliegenden Erfindung auf. Der Randbereich ist aus der Pappe 12 gebildet, damit der Ordnerdeckel 11 eine höhere Stoßfestigkeit im Randbereich aufweist. Es ist offensichtlich, dass abweichend von diesem Beispiel der Kern 11 an allen vier Seiten oder an weniger, beispielsweise zwei oder nur einer Seite, die herkömmliche feste Pappe 12 aufweisen kann. Um einen hohen Verschnitt möglichst zu vermeiden, kann bevorzugt nur die Randkante mit der höchsten Belastung die feste Pappe 12 aufweisen. Dies wäre bei Standordnern die untere Kante.

In der Darstellung der Figur 2 am linken Rand ist der gezeigte Ordnerdeckel 11 mit einem weiteren, bevorzugt gleichartigen Ordnerdeckel (nicht dargestellt) verbunden. Je nach Anforderung, insbesondere wie viel Schriftgut eingefügt werden soll, ist die Verbindung bzw. ein mit den Ordnerdeckeln jeweils verbundener Rückendeckel in Abhängigkeit des gewünschten Abstands zwischen den beiden Ordnerdeckeln entsprechend zu gestalten. Hierbei kann die Verbindung flexibel gestaltet sein, beispielsweise für eine Unterschriftenmappe, oder sie kann alternativ aus einem stabilen Material, beispielsweise aus Graupappe oder aus dem erfindungsgemäßen Kernmaterial, hergestellt sein. Diese Ausgestaltung ist für Sammelordner, insbesondere für Sammelordner mit einem mechanischen Aufnahmesystem für das Schriftgut sinnvoll. Das Aufnahmesystem kann dabei an einem der Ordnerdeckel, bevorzugt dem hinteren Deckel, oder an der Verbindung bzw. dem Rückendeckel angeordnet sein. In den Deckeln können Ausnehmungen bzw. Löcher vorgesehen sein, durch die das Aufnahmesystem teilweise durchragt. Dies kann als eine Verrastung dienen, damit der Ordner nicht ungewollt aufklappt.

Ferner kann auch der komplette Kern 11 aus dem erfindungsgemäßen zweiwelligen Kernmaterial 13 bestehen, wie es dem ersten Ausführungsbeispiel aus Figur 1 entspricht. Die Stoßfestigkeit an den Rändern kann in diesem Falle durch geeignete Auswahl einer Kaschierung oder durch im Randbereich angebrachten zusätzlichen Stoßleisten herbeigeführt werden.

In der Figur 3 ist vergrößert eine Querschnittsdarstellung durch das Kernmaterial 11 entlang der Linie I-I in der Figur 2 dargestellt. An der rechten Seite der Darstellung der Figur 3 ist deutlich die feste Pappe 12 zu erkennen. Links von der festen Pappe 12 befindet sich die zwei-lagige Wellpappe 13. Diese weist eine erste Wellenschicht 14 und darunter eine zweite Wellenschicht 15 auf. Zwischen den Wellenschichten 14, 15 ist eine Zwischendecke 16 angeordnet. Die Wellenschichten 14, 15 sind teilweise mit der Zwischendecke 16 mittels einer Klebung fest verbunden.

In der Darstellung der Figur 3 ist an den Außenseiten der Wellenschichten 14, 15 jeweils eine Kaschierung 17 angeordnet, die ebenfalls teilweise mittels Klebung mit den Wellenschichten 14, 15 fest verbunden ist.

In dem hier dargestellten Ausführungsbeispiel sind die Schichtdicken der beiden Wellenschichten 14, 15 in etwa gleich. Ferner weichen die Wellenzahlen der beiden Wellenschichten 14, 15 nur geringfügig voneinander ab, so dass von einer nahezu identischen Wellenzahl ausgegangen werden kann. Hauptvorteil dieser Ausführungsform ist durch den gleichen Ausbau beider Wellenschichten 14, 15 eine Kostenersparnis aufgrund der einfacheren Herstellung.

Obwohl in dieser Figur nicht dargestellt, können - wie im ersten Ausführungsbeispiel auch- die Kaschierungen 17 mit Prägungen versehen werden und/oder sie können ferner mit einem Aufdruck bedruckt werden.

In der Figur 4 ist eine Gesamtansicht eines Ordners 20 mit zwei Deckeln 21, 22 zu sehen, die einen Kern gemäß der Erfindung aufweisen. Die beiden Deckel 21, 22 verbindend ist ein Rückendeckel 23 vorgesehen, dessen Breite gemäß der Menge des aufzunehmenden Schriftguts bemessen ist. Der Rückendeckel 23 weist in der Darstellung der Figur 4 ein Griffloch 24 auf.

Die beiden Deckel 21, 22 und der Rückendeckel 23 können auch einteilig (beispielsweise aus Pappe) ausgebildet sein. Durch Einrollen von parallelen Nuten 28, 29 können die Deckel 21, 22 gegenüber dem Rückendeckel 23 umgebogen werden, so dass sich der Standordner aufbauen lässt.

An der Innenseite des Deckels 21 ist ein mechanisches Aufnahmesystem 25 für das Schriftgut angeordnet. Das Aufnahmesystem 25 weist zwei Bügel 26 auf, die geöffnet werden können, um gelochtes Schriftgut aufzunehmen. Den Bügeln 26 entsprechend sind in dem Deckel 22 zwei Öffnungen 27 vorgesehen, durch die jeweils ein oberer Bereich der Bügel 26 im geschlossenen Zustand des Ordners 20 hindurchragt, um ein unbeabsichtigtes Öffnen des Ordners zu verhindern. Alle drei dargestellten Öffnungen 24, 27 weisen am Rand eine Verstärkung auf, um eine größere Beständigkeit zu gewährleisten.

## Patentansprüche

1. Ordner (20) als Schriftgutbehälter mit zwei Deckeln (21, 22), die zumindest an einer Randseite miteinander verbunden sind, so dass das Schriftgut zwischen den beiden Deckeln (21, 22) eingefügt werden kann, wobei die Deckel (21, 22) jeweils einen Kern (1), der zumindest teilweise mindestens zwei Wellenschichten (3, 4) aufweist, zwischen denen eine Zwischendecke (5) angeordnet ist, und eine an dem Kern (1) angebrachte Kaschierung (2) aufweisen, **dadurch gekennzeichnet, dass** die Wellenzahlen der einzelnen Wellenschichten (3, 4) unterschiedlich sind.

2. Ordner (20) nach Anspruch 1, **dadurch gekennzeichnet, dass** der Kern (1) vollständig den mehrwelligen Aufbau aufweist.

3. Ordner (20) nach einem der vorstehenden Ansprüche, **dadurch gekennzeichnet, dass** die Dicke der Wellenschichten (3, 4) etwa 0,1 -2,0 mm beträgt.

4. Ordner (20) nach einem oder mehreren der vorstehenden Ansprüche, **dadurch gekennzeichnet, dass** die Dicken der einzelnen Wellenschichten (3, 4) unterschiedlich sind.

5. Ordner (20) nach einem oder mehreren der vorstehenden Ansprüche, **dadurch gekennzeichnet, dass** zur Verbindung des ersten und zweiten Deckels (21, 22) ein Rückendeckel (23) mit dem gleichen Kernaufbau vorgesehen ist.

6. Ordner (20) nach einem oder mehreren der vorstehenden Ansprüche, **dadurch gekennzeichnet, dass** zwischen dem ersten Deckel (21) und dem zweiten Deckel (22) ein Rückendeckel (23) vorgesehen ist und die Deckel (21, 22) und der Rückendeckel (23) einteilig ausgebildet sind, wobei der Rückendeckel (23) durch parallel verlaufende Nuten (28, 29) von dem ersten und zweiten Deckel (21, 22) abgeteilt ist.

7. Ordner (20) nach einem oder mehreren der vorstehenden Ansprüche, **dadurch gekennzeichnet, dass** an der Innenseite einer der Deckel (21) ein mechanisches Aufnahmesystem (25) für das Schriftgut angeordnet ist.

8. Ordner (20) nach einem oder mehreren der vorstehenden Ansprüche, **dadurch gekennzeichnet, dass** in den Deckeln (22, 23) eine oder mehrere Ausnehmungen (24, 27) vorgesehen sind.

9. Ordner (20) nach einem oder mehreren der vorstehenden Ansprüche, **dadurch gekennzeichnet, dass** die Kaschierung (2) Papier umfasst.

10. Ordner (20) nach einem oder mehreren der Ansprüche1 - 8, **dadurch gekennzeichnet, dass** die Kaschierung (2) eine Kunststofffolie umfasst.
